# EUROPEAN PATENT APPLICATION

(11) **EP 2 165 993 A1**
(43) Date of publication of application: **24.03.2010**
(21) Application number: 08164760.4
(22) Date of filing: 22.09.2008
(51) Int. Cl.: C05F 11/00

(54) **Composition and method for efficient uptake of plant growth nutrients**

(71) Applicant: Thermphos Trading GmbH, 6300 Zug (CH)
(72) Inventor: Leonard, Isabelle, 4250 Lens St. Servais (BE)
(74) Representative: Rippel, Hans Christoph

(57) **Abstract**

A composition, suitable for enhanced fertilizer uptake by plants, comprises a mixture of (I) an essentially water soluble carboxylated fructan component selected from the group of
(a) carboxyalkylfructan, preferably carboxyalkylinulin, having from 1 to 4 carbon atoms in the alkyl moiety, and mixtures thereof,
(b) dicarboxyfructan, preferably dicarboxyinulin, having a degree of oxidation of from 10 to 100 %, preferably 20 to 90 %, expressed as a molar percentage of monosaccharide units converted into the corresponding dicarboxy analogues,
(c) 6-carboxyfructan, preferably 6-carboxyinulin,
(d) fructan polycarboxylic acid, preferably inulin polycarboxylic acid, having a degree of carboxyalkylation or carboxyacylation of from 0.2 to 3.0, and (e) mixtures of 2, 3 or 4 of said components of (a), (b), (c) and/or (d), and

a component (II) consisting of at least one fertilizer for said plant.

## Description

The invention relates to a composition and method suitable for the promotion of plant growth which means enhancing the plant productivity by effectively improving uptake and utilization of plant growth nutrients.

Plant growth promotion is widely achieved by the use of natural as well as synthetic fertilizers (herein also called "nutrients"). The synthetic fertilizers provide to the plant primary nutrients (for example based on N, P and K), secondary nutrients (for example based on Ca and Mg), and micronutrients (for example based on Fe, Zn, Mn, B, Co, Mo, Cu, Ni) in a plant-usable form, if and when needed. However, the efficient use of fertilizers provided is important both for economical and environmental reasons.

More particularly the efficient use of fertilizers like the fertilizer phosphorus (P) is important for three main reasons: the basic material from which fertilizers are manufactured like phosphate as a source for phosphorus fertilizers, is generally a finite, non renewable resource, and it must be used efficiently to maximize its life span. Further, there is a need to maintain and improve the status of the fertilizer like the phosphorus status of many soils for the growth of crops for food, fibre and bioenergy. This is particularly important in developing countries that need to increase food production and increase rural livelihoods. Costs of phosphate and other fertilizers are continuously increasing and there is an urgent need to find economically viable ways to increase food production and optimize available agronomic land use. Finally, the transfer of soil phosphorus (derived from fertilizers and organic manures) is a major source of P-induced eutrophication of surface waters with negative environmental effects.

It is currently recognized that soil phosphorus can exist in a series of "pools" with different availabilities to plants. This is because only a part of soil phosphorus can be found in soluble phosphate ions, the rest being adsorbed on and absorbed into soil components. There is now evidence that this adsorption and absorption of phosphorus on soil components is reversible. The rate of desorption is however difficult to measure and is dependent on a lot of different factors. It is recognized that the soil available phosphorus level has to be kept to a "critical level" determined for specific crops under specific farming system which ensures optimal crop yield without unnecessary or over phosphorus fertilization.

There are several ways of improving the efficiency of soil and fertilizer phosphorus and to maintain or achieve this "critical level" of phosphorus. These have been very recently reviewed in the FAO Fertilizer and Plant Nutrition Bulletin # 18 "Efficiency of soil and fertilizer phosphorus use" (ISSN 0259-2495). These options, however, are not always effective or cost-effective. There is still a need to find economically and environmentally acceptable ways of improving fertilizer use by plants.

More particularly, one of such ways is to modify surface soil properties. Indeed, soil fertility and the efficiency of fertilizers such as phosphorus depends, in part, on the complex interaction of the biological, chemical and physical properties of soils, and the process that takes place in them. However, once again, the proposed solutions like soil pH modification and application of soil organic matter are not totally satisfactory. One of the options is the application and incorporation of a substance competing with the phosphate ions for adsorption sites within the soil. Silica or silicate is such a competitor. However, in order to be effective such silicon source must be water soluble which further increases the cost. Moreover, not all P-deficient soils react to silica or a silicate the same way which further limits the widespread use of silicon fertilization. While above background is focused on P fertilization efficiency, it is obvious for those skilled in the art that this also applies to other primary nutrients and also to secondary nutrients and micronutrients.

US Patent 5,861,356 and WO 94/09628 disclose the use of a polyaspartic acid to enhance fertilizer uptake by plants when supplied to the plant which is made usually in the root feeding zone or through foliar mechanism. However, many field studies (about 100) conducted subsequently in the United Sates and reviewed by Dr K. Kelling of Wisconsin University (published as NCR 347 - Crop responses to Amisorb in the North Central Region, 2001, University of Wisconsin - Madison, available from http://www.soils.wisc.edu/extension/publications/NCR-347-amisorb.pdf) demonstrate that the use of that polyaspartic acid is not really efficient in essentially increasing fertilizer uptake by plants and in improving crop yields.

Despite the aforementioned patent and patent application, respectively, enhanced methods and compositions for increasing the uptake of plant growth nutrients leading to improved nutrient use and crop yields are highly desired.

Therefore, it is an object of this invention to provide a composition suitable for enhanced fertilizer uptakes by plants,and, further, a method for using at least a specific component of that composition for enhanced fertilizer uptake by plants, said composition and method leading to improved growth rates and increased crop yields, even at reduced fertilizer levels. It is yet another object of this invention to provide the use of said composition as an adjuvant for the increased efficiency of utilization of a fertilizer provided to a plant, leading to improved growth rates and increased crop yields, even at reduced fertilizer levels. These and other objects are achieved by the invention which is described in more non-limiting detail hereinafter.

The composition according to the invention and suitable for enhanced fertilizer uptake by plants is described in claim 1. It comprises a mixture of
(I) an essentially water soluble carboxylated fructan component (I) selected from the group of
   (a) carboxyalkylfructan, preferably carboxyalkylinulin, having from 1 to 4 carbon atoms in the alkyl moiety, and mixtures thereof,
   (b) dicarboxyfructan, preferably dicarboxyinulin, having a degree of oxidation of from 10 to 100 %, preferably 20 to 90 %, expressed as a molar percentage of monosaccharide units converted into the corresponding dicarboxy analogues,
   (c) 6-carboxyfructan, preferably 6-carboxyinulin,
   (d) fructan polycarboxylic acid, preferably inulin polycarboxylic acid, having a degree of carboxyalkylation or carboxyacylation of from 0.2 to 3.0, and
   (e) mixtures of 2, 3 or 4 of said components of (a), (b), (c) and/or (d), and a component (II) consisting of at least one fertilizer for said plant.

The term "fertilizer" according to the invention may be natural and synthetic fertilizer as defined above. The term "nutrient" shall have the same meaning as the term fertilizer. The fertilizers (nutrients) used according to the invention may be natural or synthetic. The synthetic fertilizers usually provide nitrogen or phosphorus in a form usable by the plant, such as urea, inorganic nitrates and phosphates.

Fructans used as starting material for producing the carboxylated fructan used as component (I) are oligo- and polysaccharides which have a majority of anhydrofructose units, and can have a polydisperse chain length distribution and can be of straight- or branched-chain. Preferably, the fructan contains mainly beta-2,1 bonds, as in inulin. The fructans used as starting material for producing component (I) can be products obtained directly from a vegetable source or other sources as well as products in which the average chain length has been modified, increased or reduced, by fractionation, enzymatic synthesis or hydrolysis.

Carboxylated fructans with modified average chain length, and suitable for use as component (I) in accordance with the inventive technology, can be made from fructans with enzymatically increased chain length, fructan hydrolysis products having shortened chains and fractionated products having a modified chain length. Fractionating of fructans such as inulin can be achieved, for example, by means of known techniques including low temperature crystallization (see WO 94/01849), column chromatography (see WO 94/12541), membrane filtration (see EP-A-0440074, EP-A-0627490) or selective precipitation with alcohol. Hydrolysis to yield shorter fructans can be carried out, for example, enzymatically (endo-insulase), chemically (water and acid) or by heterogeneous catalysis (acid column). Reduced, oxidized, hydroxyalkylated and/or crosslinked fructans can also represent suitable starting materials to produce the carboxylated fructans used as component (I).The fructans have an average chain length (degree of polymerization, DP) of at least 3 to about 1,000. Preferably, the average chain length is from 3 to 60, in particular of from 5 to 30 monosaccharide units. A preferred fructan is inulin (beta-2,1-fructan) or a modified inulin.

In preferred embodiments of the invention the fructan component (I) of the composition is carboxymethylinulin and/or carboxyethylinulin, preferably with a degree of substitution (DS) in the range of from 1.5 to 2.8, and/or dicarboxyinulin having a degree of oxidation (DO) of from 20 to 90%, expressed as a molar percentage of monosaccharide units converted into the corresponding dicarboxy analogues.

Carboxymethylinulin can be prepared by reaction of the fructan with chloroacetic acid as described in WO 95/15984. Carboxylethylinulin can be prepared in accordance with the method of WO 96/34017. The carboxyalkylinulin so prepared can have a degree of substitution (DS) up to 3.0. The DS of such carboxyalkylinulins is generally within the range of from 0.2 to 3.0, preferably from 1.0 to 2.8. Preferred carboxyalkylinulins for use within the claimed technology have a DS in the range of from 1.5 to 2.8, most preferably 1.8 to 2.5. Carboxyinulins having a DS above 2.8 are less desirable.

Dicarboxyinulins can be obtained through oxidation of the inulin raw material. The anhydrofructose units are converted, with ring opening, into dicarboxy(hydroxyethoxy)ethyleneoxy units. The oxidation can proceed in one step with hypohalite, as described in WO 91/17189, or in two steps with periodate and chlorite, as described in WO 95/12619. Preferred degrees of oxidation (DO) are in the range of from 20 to 90%, the DO being the (molar) percentage of monosaccharide units converted into the corresponding dicarboxy analogues.

6-Carboxy inulin is a well known material. It can be obtained by oxidation in accordance with the method of WO 95/07303.

Fructan polycarboxylic acid can be prepared by successive oxidation and carboxyalkylation of the selected starting material. The material has a DO of from 0.2 to 2.0 and a degree of carboxy-alkyl/-acyl substitution of from 0.2 to 3, preferably from 0.5 to 2.5.

The method for promoting plant growth according to the invention is described in claim 7. It comprises supplying to the plant a growth promoting amount of an essentially water soluble, carboxylated fructan component selected from the group of
(a) carboxyalkylfructan, preferably carboxyalkylinulin, having from 1 to 4 carbon atoms in the alkyl moiety,
(b) dicarboxyfructan, preferably dicarboxyinulin, having a degree of oxidation of from 10 to 100 %, preferably 20 to 90 %, expressed as a molar percentage of monosaccharide units converted into the corresponding dicarboxy analogues,
(c) 6-carboxyfructan, preferably 6-carboxyinulin,
(d) fructan polycarboxylic acid, preferably inulin polycarboxylic acid, having a degree of carboxyalkylation or carboxyacylation of from 0.2 to 3.0, and
(e) mixtures of 2, 3 or 4 of said components of (a), (b), (c) and/or (d).

In a preferred embodiment of said method, the carboxylated fructan component (a) of the composition is carboxymethylinulin and/or carboxyethylinulin. The degree of substitution (DS) of these components is preferably in the range of from 1.5 to 2.8, and their average molecular weight is preferably in the range of 2,000 to 10,000.

The use of a composition according to the invention is mentioned in claim 9. It comprises making a carboxylated fructan component (I) available to a plant in conjunction with at least one further component (II) consisting of a fertilizer or a mixture of fertilizers. The component (I) consists of an essentially water soluble, carboxylated fructan component as an adjuvant for the increased efficiency of utilization of a fertilizer provided to a plant. Said use comprises making a carboxylated fructan component available to said plant in conjunction with at least one further component (II) consisting of a fertilizer or a mixture of fertilizers. The carboxylated fructan component is selected from the group of
(a) carboxyalkylfructan, preferably carboxyalkylinulin, having from 1 to 4 carbon atoms in the alkyl moiety,
(b) dicarboxyfructan, preferably dicarboxyinulin, having a degree of oxidation of from 10 to 100 %, preferably 20 to 90 %, expressed as a molar percentage of monosaccharide units converted into the corresponding dicarboxy analogues,
(c) 6-carboxyfructan, preferably 6-carboxyinulin,
(d) fructan polycarboxylic acid, preferably inulin polycarboxylic acid, having a degree of carboxyalkylation or carboxyacylation of from 0.2 to 3.0, and
(e) mixtures of 2, 3 or 4 of said components of (a), (b), (c) and/or (d).

The carboxylated fructan component (I) is supplied separately or in combination with said further component (II) consisting of a fertilizer or mixture of fertilizers to the plant, and optionally auxiliaries and adjuvants generally used for the application of fertilizers.
The composition to be supplied may be in the form of an aqueous liquid or in a substantially solid form. To increase handling or use convenience - component (I) can be coated on or incorporated into a suitable solid carrier that will release the water soluble component on a suitable timely fashion. Such carrier can be - but is not limited to - a solid fertilizer based for example on N, P, K, NP, NK or NPK granules. The carrier selected must not significantly alter the properties of the component (I).

The carboxylated fructan component of the invention is able to interact with nutrients and/or with soil components so as to make these nutrients more efficient and/or more available to the plant thereby allowing plant growth in a more efficient manner. Lower nutrient dosages can be relied upon to provide the requisite nutrients to the plant.

In general, the carboxylated fructan component can be made available to the plant as nutrient solutions containing at least about 10 ppb (parts per billion) by weight, preferably about 0.1 to about 1,000 ppm (parts per million) by weight, more preferably about 1 to about 500 ppm by weight, of the carboxylated fructan component in the solution. Such solutions can be applied to the soil surrounding the plant so as to contact the plant's root system, can be applied to the plant's foliage utilizing usual foliar feeding techniques, can be introduced into hydroponic gardening and farming systems, and in any other convenient manner. Solutions containing the carboxylated fructan component can be sprayed or otherwise applied to contact the roots, stems, or leaves of the plants whose growth and/or development is to be enhanced, as well as to the seeds or reproduction parts of these plants. When used in aqueous solution, the fertilizer component may comprise auxiliaries, adjuvants and additives generally used in aqueous mixtures of fertilizers ready for application.

The carboxylated fructan component can be applied to soil in solid form alone or in combination with nutrients. Granular, pelletized, dust or powdered forms of the carboxylated fructan component can be applied by gravity or air blast equipment in the furrow, row or site at seeding or planting time. Dry granular or pellet forms of the carboxylated fructan component can be impregnated or pre-formed as carriers of nutrients and can be used for surface application by ground rig or air craft.

There are many technical fields for the application of the present invention, such as, for example, application in agriculture, horticulture, hydroponics, forestry and the like.

## Claims

1. A composition, suitable for enhanced fertilizer uptake by plants, comprising a mixture of
(I) an essentially water soluble carboxylated fructan component selected from the group of
(a) carboxyalkylfructan, preferably carboxyalkylinulin, having from 1 to 4 carbon atoms in the alkyl moiety, and mixtures thereof,
(b) dicarboxyfructan, preferably dicarboxyinulin, having a degree of oxidation of from 10 to 100 %, preferably 20 to 90 %, expressed as a molar percentage of monosaccharide units converted into the corresponding dicarboxy analogues,
(c) 6-carboxyfructan, preferably 6-carboxyinulin,
(d) fructan polycarboxylic acid, preferably inulin polycarboxylic acid, having a degree of carboxyalkylation or carboxyacylation of from 0.2 to 3.0, and (e) mixtures of 2, 3 or 4 of said components of (a), (b), (c) and/or (d), and a component (II) consisting of at least one fertilizer for said plant.

2. The composition of claim 1, wherein the carboxylated fructan component (a) is carboxymethylinulin and/or carboxyethylinulin, preferably with a degree of substitution (DS) in the range of from 1.5 to 2.8.

3. The composition of claim 1 or 2, wherein the component (a) has an average molecular weight in the range of 2,000 to 10,000.

4. A method for promoting plant growth which comprises supplying to the plant a growth promoting amount of an essentially water soluble, carboxylated fructan component selected from the group of
(a) carboxyalkylfructan, preferably carboxyalkylinulin, having from 1 to 4 carbon atoms in the alkyl moiety,
(b) dicarboxyfructan, preferably dicarboxyinulin, having a degree of oxidation of from 10 to 100 %, preferably 20 to 90 %, expressed as a molar percentage of monosaccharide units converted into the corresponding dicarboxy analogues,
(c) 6-carboxyfructan, preferably 6-carboxyinulin,
(d) fructan polycarboxylic acid, preferably inulin polycarboxylic acid, having a degree of carboxyalkylation or carboxyacylation of from 0.2 to 3.0, and
(e) mixtures of 2, 3 or 4 of said components of (a), (b), (c) and/or (d).

5. The method of claim 4, wherein the carboxylated fructan component (a) is carboxymethylinulin and/or carboxyethylinulin, preferably with a degree of substitution (DS) in the range of from 1.5 to 2.8.

6. The method of claim 4 or 5, wherein the component (a) has an average molecular weight in the range of 2,000 to 10,000.

7. The method of claim 4, 5 or 6, wherein the essentially water soluble, carboxylated fructan component (I) is supplied separately or in combination with at least one further component (II) consisting of a fertilizer for said plant.

8. The method according to any of the claims 4 to 7, wherein the growth promoting amount of said carboxylated fructan component (I) is provided in an aqueous solution or in a substantially solid form.

9. The use of a composition comprising the essentially water soluble, carboxylated fructan component (I) of claim 1, 2 or 3, as an adjuvant for the increased efficiency of utilization of a fertilizer provided to a plant, said use comprising making said carboxylated fructan component available to said plant in conjunction with at least one further component (II) consisting of a fertilizer.

10. The use of claim 9, wherein the essentially water soluble, carboxylated fructan component (I) is supplied separately or in combination with said further component (II).

11. The use of claim 9 or 10, wherein the composition is supplied in the form of an aqueous liquid or in a substantially solid form.
